# EUROPEAN PATENT SPECIFICATION

(11) **EP 2 950 295 B1**
(45) Date of publication and mention of the grant of the patent: **12.04.2017**
(21) Application number: 15166081.8
(22) Date of filing: 30.04.2015
(51) Int. Cl.: G08G 5/00, G08G 5/02

(54) **SYSTEM AND METHOD FOR ECONOMIZING FLIGHT EXPENDITURES DURING AIRCRAFT DESCENT AND APPROACH**
SYSTEM UND VERFAHREN ZUR EINSPARUNG VON FLUGKOSTEN WÄHREND DES SINK- UND ANFLUGS EINES FLUGZEUGS
SYSTÈME ET PROCÉDÉ PERMETTANT DE RÉALISER DES ÉCONOMIES SUR LES DÉPENSES DE VOL PENDANT LA DESCENTE ET APPROCHE D'UN AÉRONEF

(30) Priority: 27.05.2014 US 201414287375
(43) Date of publication of application: 02.12.2015
(73) Proprietor: Honeywell International Inc., Morris Plains, NJ 07950 (US)
(72) Inventor: Chaubey, Rajesh, Morristown, NJ 07962-2245 (US); Kawalkar, Amit Nishikant, Morristown, NJ 07962-2245 (US)
(74) Representative: Houghton, Mark Phillip

(56) References cited:
- WO-A2-2009/035757
- US-A1- 2012 290 155
- US-B1- 6 389 355
- US-B1- 8 633 913

## Description

### TECHNICAL FIELD

The exemplary embodiments described herein generally relates to the field of aviation and more particularly to economizing flight expenditures relating to fuel consumption, emissions, and energy profile during descent and approach operations.

### BACKGROUND

Modern map displays, particularly those used in aircraft for flight planning and monitoring, are capable of displaying a considerable amount of information such as flight planning information. Flight planning information may include, for example, flight path and altitude information useful to the pilot.

These electronic instrumentation displays continue to advance in sophistication, achieving increasingly higher levels of information density and, consequently, presenting a greater amount of visual information to be perceived and understood by the operator, e.g., the pilot. It is important that visual displays provide a proper cognitive mapping between what the operator is trying to achieve and the information available to accomplish the task.

The vertical situation display (VSD) shows the vertical trajectory of the aircraft to inform the pilot of aircraft position with regard to a descent and approach path. The path is an optimized profile, and flying on the recommended descent and approach path achieves more efficient operation of the aircraft with regard to fuel and emission, autopilot and auto throttle modes.

An aircraft is controlled by a combination of autopilot and auto throttle modes, and airlines or aircraft manufacturers prefer to have the most efficient use of these modes, especially on the descent and approach flight phases, to control the aircraft for maintaining the path. Benefits such as fuel saving and reduced maintenance cost are achieved when the aircraft maintains the path. However, there are operational situations in which the aircraft diverts from the path due to, for example, air traffic control (ATC) directed diversions, atmospheric disturbances, or initiation of an early/late descent by the pilot.

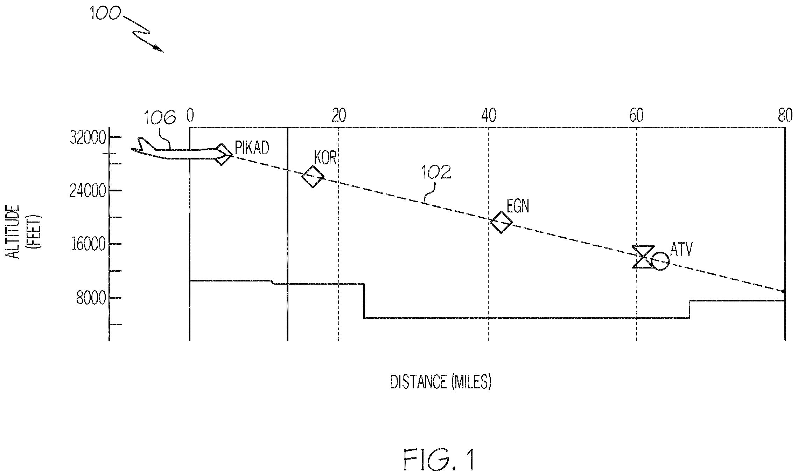

FIG. 1 is a known VSD 100 when an aircraft 106 is flying on the recommended path 102; however, insufficient information is provided that would provide situational awareness allowing a pilot to make informed decisions to intercept the recommended vertical profile when the aircraft is not complying with the recommended vertical profile. Overall, the VSD 100 presents an optimized strategic path; however, it fails to provide information regarding how these optimized strategic paths are laid out during descent and approach path.

In scenarios, e.g., where the aircraft is above or below the recommended vertical profile, he cannot adjust aircraft configuration to minimize fuel consumption and emissions without additional information than that provided by the known VSD, and does not have the situation awareness to efficiently manage aircraft energy during descent and approach phases.

Accordingly, it is desirable to provide a system and method for assisting pilots to manage fuel consumption, emissions, and energy profile during descent and approach operations. Furthermore, other desirable features and characteristics of the exemplary embodiments will become apparent from the subsequent detailed description and the appended claims, taken in conjunction with the accompanying drawings and the foregoing technical field and background.

WO2009/035757A2 discloses a flight management system for aircraft that includes a processor adapted to receive and convert, in response to the user inputs received from a user interface, data from a navigation database into a format representative of images of the flight plans. A display device is operatively coupled to the processor to render the images of the flight plans. The user interface includes a rotationally or linearly displaceable positioning element for causing the flight plan images to be displayed on the display device in a prescribed sequence that does not omit any intervening flight plans arising in the sequence.

US6389355B1 discloses an integrated graphical user interface which facilitates the display and editing of aircraft flight-plan data. A user (e.g., a pilot) provides input to a processor through a cursor control device and receives visual feedback via a display. The display includes various graphical elements associated with the lateral position, vertical position, flight-plan and/or other indicia of the aircraft's operational state as determined from avionics data and/or various data sources. Through use of the cursor control device, the user may modify the flight-plan and/or other such indicia graphically in accordance with feedback provided by the display. In one embodiment, the display includes a lateral view, a vertical profile view, and a hot-map view configured to simplify the display and editing of the aircraft's flight-plan data.

### BRIEF SUMMARY

The present invention provides a method for assisting a pilot in flying an aircraft on a computed vertical profile, according to claim 1 of the appended claims.

The invention further provides a system for assisting a pilot in flying an aircraft on a computed vertical profile, according to claim 8 of the appended claims.

A system and method are provided for assisting pilots to manage fuel consumption, emissions, and energy profile during descent and approach operations.

In an exemplary embodiment, a method for assisting a pilot in flying an aircraft on a computed vertical profile, comprises providing for display the computed vertical profile; providing for display an interface display including a plurality of symbols; receiving an input identifying one of the symbols; and determining a location on the computed vertical profile for a marker associated with the identified symbol in consideration of flight parameters of the aircraft.

In another exemplary embodiment, a method for assisting a pilot in flying an aircraft on a computed vertical profile, comprisesdisplaying the computed vertical profile; displaying an interface display including a plurality of symbols, the symbols representing at least one of the group consisting of an idle path, a geometric path, an airbrake segment, a constant speed segment, an non-constant speed segment, and a flight path angle; receiving an input identifying at least one of the symbols; and determining, in consideration of flight parameters of the aircraft, a location on the computed vertical profile for at least one of a plurality of markers, each of the markers associated with one of the symbols.

In yet another exemplary embodiment, a system for assisting a pilot in flying an aircraft on a computed vertical profile, the system comprising a display configured to display the computed vertical profile; display an interface display including a plurality of symbols, the symbols representing at least one of the group consisting of an idle path, a geometric path, an airbrake segment, a constant speed segment, an non-constant speed segment, and a flight path angle; a processor configured to receive an input identifying at least one of the symbols; and determine, in consideration of flight parameters of the aircraft, a location on the computed vertical profile for at least one of a plurality of markers, each of the markers associated with one of the symbols.

### BRIEF DESCRIPTION OF THE DRAWINGS

The present invention will hereinafter be described in conjunction with the following drawing figures, wherein like numerals denote like elements, and
FIG. 1 is a known VSD with an aircraft on the computer generated approach path;
FIG. 2 is a block diagram of a display system suitable for use in an aircraft in accordance with the exemplary embodiments described herein;
FIG. 3 is a computer generated approach path including symbols in accordance with an exemplary embodiment;
FIG. 4 is a computer generated approach path including symbols in accordance with an exemplary embodiment;
FIG. 5 is a computer generated approach path including first symbols in accordance with the exemplary embodiment;
FIG. 6 is a computer generated approach path including second symbols in accordance with the exemplary embodiment;
FIG. 7 is a computer generated approach path including third symbols in accordance with the exemplary embodiment;
FIG. 8 is a computer generated approach path including fourth symbols in accordance with the exemplary embodiment;
FIG. 9 is a computer generated approach path including fifth symbols in accordance with the exemplary embodiment;
FIG. 10 is a computer generated approach path including sixth symbols in accordance with the exemplary embodiment;
FIG. 11 is a flow diagram of an exemplary method suitable for use with the display system of FIG. 1 in accordance with the exemplary embodiments; and
FIG. 12 is a flow diagram of another exemplary method suitable for use with the display system of FIG. 1 in accordance with the exemplary embodiments.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "swerving as an example, instance, or illustration." Any embodiment described herein as "exemplary" is not necessarily to be construed as preferred or advantageous over other embodiments. Any of the above devices are exemplary, non-limiting examples of a computer readable storage medium.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

While the exemplary embodiments described herein refer to displaying the information on aircraft, the invention may also be applied to other vehicle display systems such as displays in sea going vessels and displays used by off-site controllers, e.g., ground controllers.

Alternate embodiments of the present invention to those described below may utilize whatever navigation system signals are available, for example a ground based navigational system, a GPS navigation aid, a flight management system, and an inertial navigation system, to dynamically calibrate and determine a precise course.

In existing vertical display systems, only the computed trajectory is communicated to the pilot. However, critical information that would help the pilot to negotiate a vertical profile intercept for better fuel savings, lower emissions, and safer operations are missing. The exemplary embodiments described herein provides the situation awareness that enables the pilot to take more informed, cost effective, and safer decisions while performing descent and approach operations.

The exemplary embodiments provide unique symbologies and visualization methods which ensures the display is not crowded, and readability and intuitiveness is conserved, even the pilot selects multiple segment type options on the VSD.

The exemplary embodiments utilize the flight management system's knowledge of various segment types to optimize fuel consumption, emission footprint and safety, and with intuitive visualization techniques to augment the pilot's overall situation awareness and user experience while performing descent and approach operations, which in turn reduces airline's operational cost.

In accordance with the exemplary embodiments, a system and method provide sufficient and critical situation awareness for a pilot to appropriately configure the aircraft as well as intercept the flight management system computed vertical profile in order to reduce fuel consumption, emission and better manage aircraft energy for safer operations. Markers are displayed on the VSD providing information to the pilot. Each marker suggests a profile that the pilot may select involving aircraft configuration and actual flown trajectory versus the computed vertical profile, especially when aircraft is off the computed vertical profile.

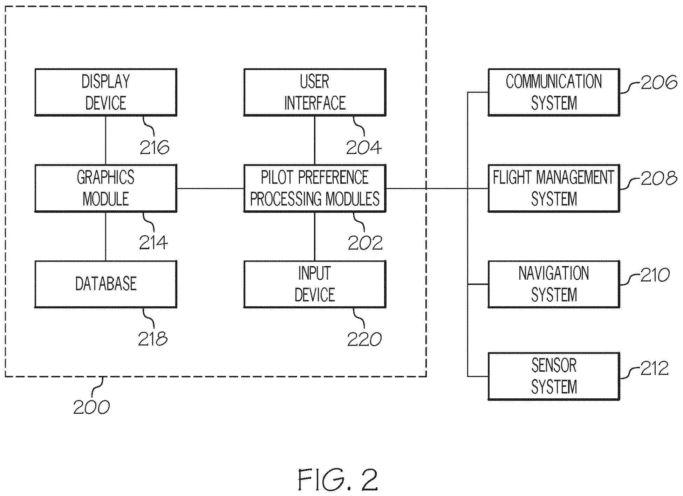

Referring to FIG. 2, a block diagram of a display system 200 suitable for use with the exemplary methods includes a pilot preference processing module 202 coupled to each of a user interface 204, a communication system 206, a flight management system 208, a navigation system 210, a sensor system 212, and a graphics module 214. The graphics module 214 is further coupled to a display device 216 (which is a VSD in the described exemplary embodiments), a database 218, and an input device 220.

It should be understood that FIG. 2 is a simplified representation of the display system 200 for purposes of explanation and ease of description, and FIG. 2 is not intended to limit the application or scope of the subject matter in any way. In practice, the display system 200 and/or aircraft will include numerous other devices and components for providing additional functions and features, as will be appreciated in the art.

In an exemplary embodiment, the graphics modules 214 is coupled to the display device 216, the database 218, and the pilot preference processing modules 202, and are cooperatively configured to display, render, or otherwise convey one or more graphical representations or images associated with operation of the aircraft on the display device 216, as described in greater detail below. The pilot preference processing modules 202 is coupled to the navigation system 210 and the sensor system 212 for obtaining real-time navigational data and/or information regarding operation of the aircraft to support operation of the system 200. In an exemplary embodiment, the communications system 206 is coupled to the pilot preference processing modules 202 and configured to support communications to and/or from the aircraft, as will be appreciated in the art. The pilot preference processing modules 202 is also coupled to the flight management system 208, which in turn, may also be coupled to the navigation system 210, the communications system 206, and the sensor system 212 to support navigation, flight planning, and other aircraft control functions in a conventional manner, as well as to provide real-time data and/or information regarding operation of the aircraft to the pilot preference processing modules 202. In an exemplary embodiment, the input device 220 is coupled to the pilot preference processing modules 202, and the input device 220 and the pilot preference processing modules 202 are cooperatively configured to allow a user to interact with the display device 216 and other elements of system 200 by providing an input to the input device 220, as described in greater detail below.

The pilot preference processing module 202 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration.

The display device 216 is configured to provide the enhanced images to the operator. In accordance with an exemplary embodiment, the display device 216 may be implemented using any one of numerous known displays suitable for rendering textual, graphic, and/or iconic information in a format viewable by the operator. Non-limiting examples of such displays include various cathode ray tube (CRT) displays, and various flat panel displays such as various types of LCD (liquid crystal display) and TFT (thin film transistor) displays. The display device 216 may additionally be implemented as a panel mounted display, a HUD (head-up display) projection, or any one of numerous known technologies. It is additionally noted that the display device 216 may be configured as any one of numerous types of aircraft flight deck displays. For example, it may be configured as a multi-function display, but preferably is a vertical situation indicator. In the depicted embodiment, the display device 216 is configured as a vertical situation indicator.

In an exemplary embodiment, the navigation system 210 is configured to obtain one or more navigational parameters associated with operation of the aircraft. The navigation system 210 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 210, as will be appreciated in the art. In an exemplary embodiment, the communications system 210 is suitably configured to support communications between the aircraft and another aircraft or ground location (e.g., air traffic control). In this regard, the communications system 210 may be realized using a radio communication system or another suitable data link system. In an exemplary embodiment, the flight management system 208 maintains information pertaining to a current flight plan (or alternatively, a current route or travel plan).

In accordance with one or more embodiments, the flight management system 208 is configured to determine, track, or otherwise identify the current and planned operating state of the aircraft. As used herein, a flight phase or phase of flight of the aircraft should be understood as a distinguishable segment of the operation of the aircraft associated with traversing the aircraft along a flight path. For example, operation of the aircraft including a descent phase (e.g., from cruise altitude to initial approach), and an approach phase. Various phases of flight are well known, and will not be described in detail herein. It should be noted that the phases of flight may be combined and/or categorized in numerous possible manners and/or each phase of flight may comprise numerous sub-phases (for example, an approach phase may include sub-phases for idle power, airbrake, and a constant speed), and the subject matter is not intended to be limited to any particular number and/or classification of flight phases.

In operation, the display system 200 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well-known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display system 200 is suitably designed to process data obtained from the sources of flight status data in the manner described in more detail herein. In particular, the display system 200 can use the flight status data of the host aircraft when rendering the ITP display.

During the course of this description, like numbers may be used to identify like elements according to the different figures that illustrate the various exemplary embodiments.

The described exemplary embodiments provide a critical situation awareness tool and corresponding arrangement that enables the pilot to interact with VSD systems to select for display any one or combination of the descent and approach path types.

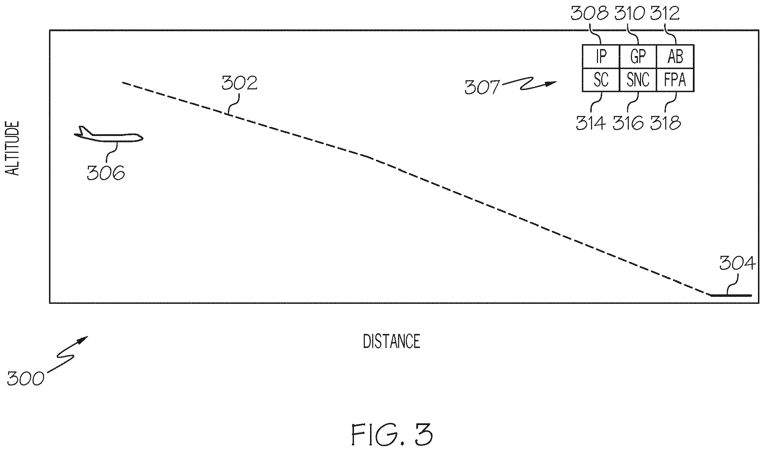

Referring to FIG. 3, a vertical display 300 includes the computed vertical profile 302 for an approach to the runway 304 by the aircraft 306, and an interface display 307 containing unique symbols, or icons, including an idle path symbol 308, a geometric path symbol 310, an airbrake segment symbol 312, a constant speed segment symbol 314, a non-constant speed segment symbol 316, and a flight path angle symbol 318. The symbols 308, 310, 312, 314, 316, 318 within the interface display 307 may be selected by the pilot by selecting one or more of the symbols 308, 310, 312, 314, 316, 318. In one embodiment, the interface display 307 may be a touch screen, and in another embodiment a cursor may be placed over the desired symbol 308, 310, 312, 314, 316, 318 using the user interface 204.

The following is an exemplary definition of each of the symbols 308, 310, 312, 314, 316, 318 indicating a flight parameter that may be used during the next segment of flight:
idle path symbol 308: an idle power setting may be used,
geometric path symbol 310: various altitude limitations are defined along the flight path,
airbrake segment symbol 312: airbrakes may be used,
constant speed segment symbol 314: a constant speed may be maintained,
non-constant speed segment symbol 316: a variable speed may be necessary, and
flight path angle symbol 318: a defined angle of descent is recommended.

The symbols 308, 310, 312, 314, 316, 318 are placed on the vertical display 300 in relation to the computed vertical profile 302 at a location determined by the pilot preference processing modules 202. Given the flight plan, the FMS 208 computes/predicts flight profiles (both lateral and vertical) of the aircraft within the specified flight plan constraints and aircraft performance limitations, based on entered atmosphere data and the crew selected mode of operation. The flight profile is continuously updated to account for non-forecasted conditions and tactical diversions from the specified flight plan. The flight path trajectory is broken into two parts: lateral profile and vertical profile. The vertical profile backward construction from destination till cruise flight level methodology is considered.

The backward construction from destination till cruise flight level methodology is comprised of approach profile and descent profile construction. The path is constructed backward from the destination till cruise flight level. There are two kinds of path: IP and GP. Initially, an idle path construction takes place using aircraft state construction parameters, and if all the altitude constraints are made with an idle path, then there will not be any geometric path. The idle path will be constructed from this point until cruise altitude. If an altitude constraint is violated by idle path construction, then there is a need to meet an altitude constraint, and to meet the constraint, geometric path construction takes place from a previous geometric path point until an altitude constraint is violated. An idle path is constructed from this point till cruise flight level.

The following scenarios illustrate how the exemplary embodiments can improve fuel savings, reduce emissions and improve overall safety by effective descent energy management.

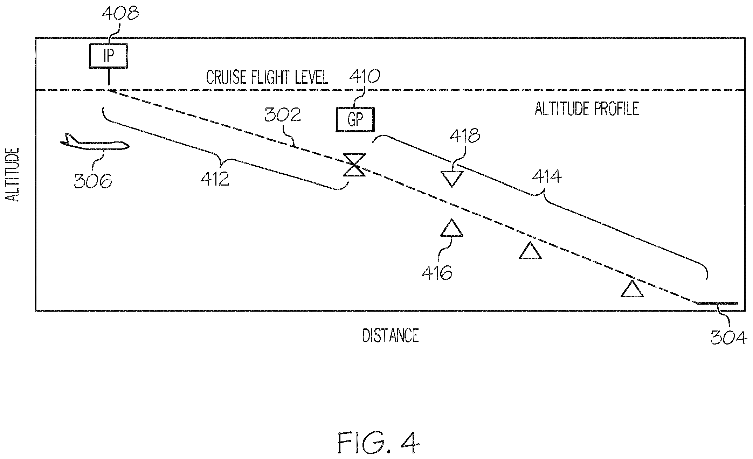

FIG. 4 illustrates the pilot's preference to visualize only the idle path and the geometric path on the display device 216 (VSD). It is noted that the aircraft 306 is below the computed vertical profile 302. The pilot would select the IP 308 and GP 310 from the interface display 307 (FIG. 3), and the related markers IP 408 and GP 410 would appear on the display device 216 (FIG. 4) in the location as discussed above. The segment of the computed vertical profile 302 following each marker is associated with that marker. In other words, segment 412 is associated with the marker IP 309, and the segment 414 is associated with the marker GP 310. The pilot would fly the aircraft 306 until reaching the computed vertical profile 302, and then could reduce the throttles to idle to continue flight on the segment 302, thereby reducing fuel consumption and emissions. Upon reaching the GP marker 410, the geometric path would be flown. Note the upward facing icons 416 indicate a minimum altitude, and the downward facing icons 418 indicate a maximum altitude.

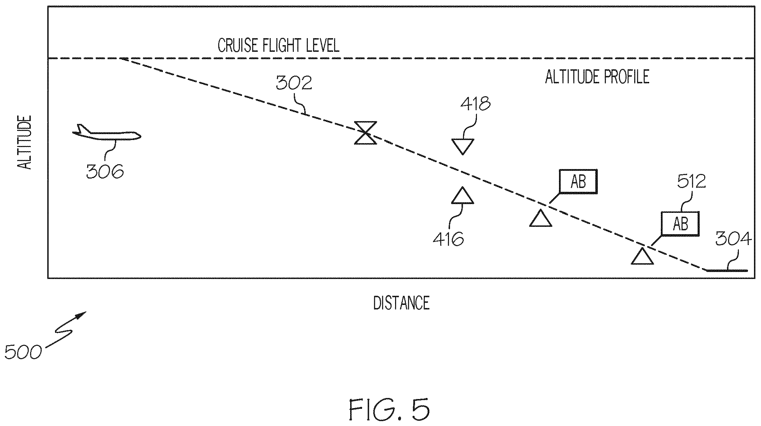

Referring to FIG. 5, a FSD 500 includes airbrake markers 512 in response to the pilot selecting AB 312 on the interface display 307 of FIG. 3. The airbrake markers 512 suggest that airbrakes may be necessary to remain on the computed vertical profile 302. It is noted the pilot can alter the flight profile before reaching the airbrake segment; thereby reducing the sudden mechanical stress induced on airframe when applying airbrake.

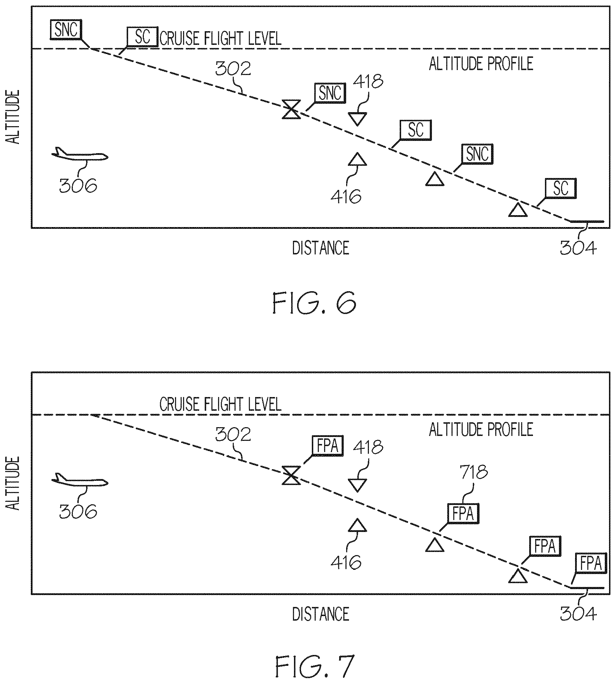

FIG. 6 reflects the situation where the pilot desires to visualize speed segments. The pilot selects a constant speed segment symbol 314 and/or a non-constant speed segment symbol 316. The exemplary embodiment illustrates selections of both, resulting in the display of the markers 614 and 616, respectively. These markers allow the pilot to make informed decision whether the intercept can be achieved at a constant speed segment, where additional fuel can be saved.

Referring to FIG. 7, flight path markers 718 are displayed in response to the pilot's selection of the flight path angle marker 718. The FPA segment is critical in managing the energy during descent and approach operations. An aircraft must not fly below FPA segment, as it would be challenging for the pilot to return to the computed profile. Pilots must know the FPA profile while intercepting the vertical profile. The pilot may then plan the intercept of the computed vertical profile 302 before FPA segments are started.

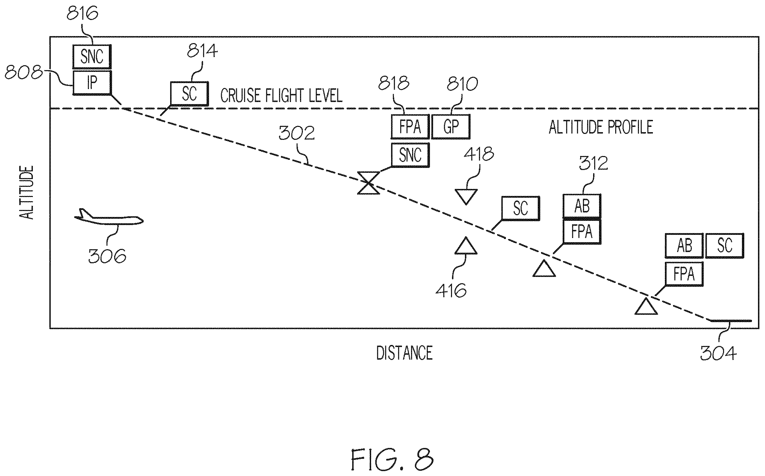

FIG. 8 illustrates the selection of a plurality of markers 307 by the pilot, including all of the symbols 308, 310, 312, 314, 316, 318 within the interface display 307 shown in FIG. 3. The markers 808, 810, 812, 814, 816, 818 are clustered to one another to reflect more than one segment type; thereby reducing clutter and improving readability.

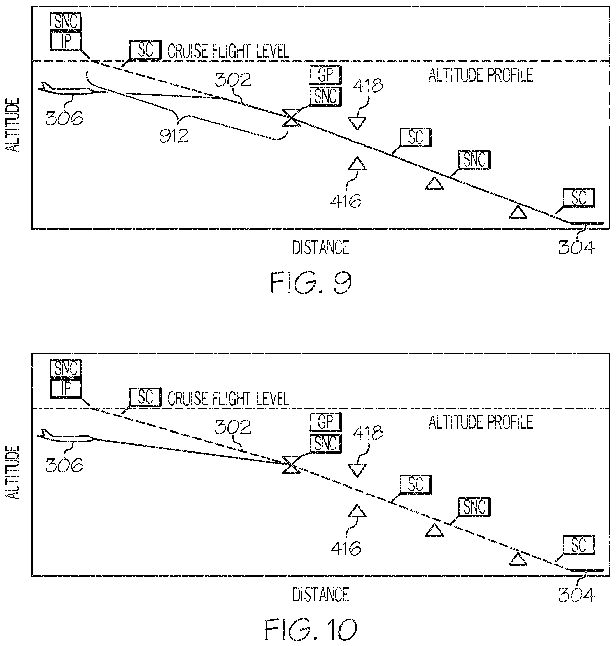

FIG. 9, which includes the plurality of markers 808, 810, 812, 814, 816, 818, illustrates that the pilot of the aircraft 306 wishes to intercept the constant speed idle path segment 912 of computed vertical profile 302. The benefit of having such information displayed is to provide guidance to the pilot so the aircraft may rejoin the computed vertical profile 302 to optimize speed and thrust. The benefit of flying on the idle path is the use of idle thrust.

FIG. 10 reflects that the pilot desires to intercept the non-constant speed geometric marker 810 on the computed vertical profile 302. The benefit of flying on this path is to make use of slope control on elevator and thrust limited to idle.

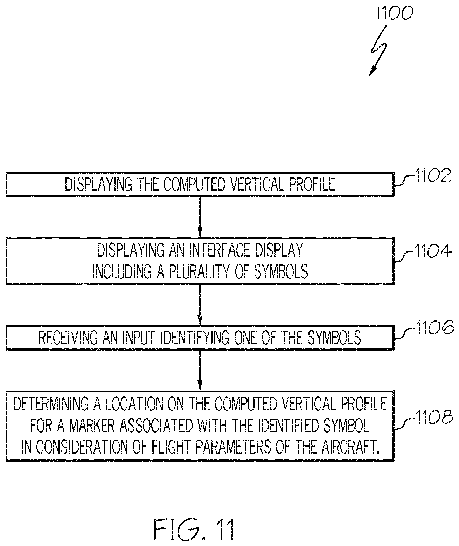

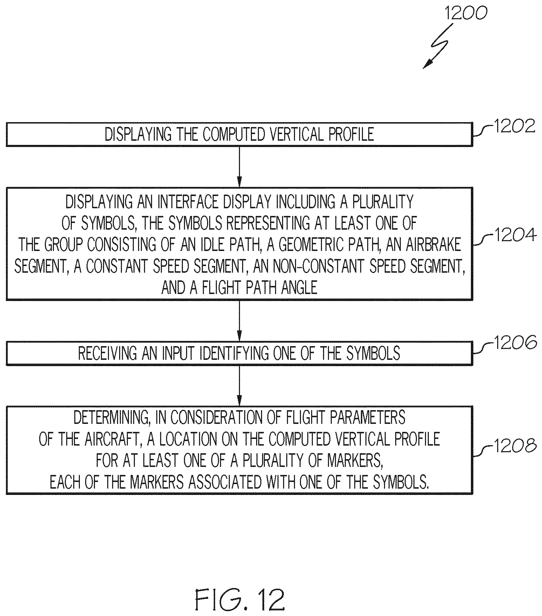

FIGS. 11 and 12 are flow charts that illustrate exemplary embodiments of methods 1100, 1200 suitable for use with a flight deck display system 100. Methods 1100, 1200 represents one implementation of a method for displaying aircraft approaches or descents on an onboard display of a host aircraft. The various tasks performed in connection with methods 1100, 1200 may be performed by software, hardware, firmware, or any combination thereof. For illustrative purposes, the following description of methods 1100, 1200 may refer to elements mentioned above in connection with preceding FIGS. In practice, portions of methods 1100, 1200 may be performed by different elements of the described system, e.g., a processor, a display element, or a data communication component. It should be appreciated that methods 1100, 1200 may include any number of additional or alternative tasks, the tasks shown in FIGS. 11, 12 need not be performed in the illustrated order, and methods 1100, 1200 may be incorporated into a more comprehensive procedure or method having additional functionality not described in detail herein. Moreover, one or more of the tasks shown in FIGS. 11, 12 could be omitted from an embodiment of the method 1100, 1200 as long as the intended overall functionality remains intact.

In accordance with the exemplary method of FIG. 11, a method for assisting a pilot in flying an aircraft on a computed vertical profile comprises displaying 1102 the computed vertical profile; displaying 1104 an interface display including a plurality of symbols; receiving 1106 an input identifying one of the symbols; and determining 1108 a location on the computed vertical profile for a marker associated with the identified symbol in consideration of flight parameters of the aircraft.

In accordance with the exemplary method of FIG. 12, a method for assisting a pilot in flying an aircraft on a computed vertical profile comprises displaying 1202 the computed vertical profile; displaying 1204 an interface display including a plurality of symbols, the symbols representing at least one of the group consisting of an idle path, a geometric path, an airbrake segment, a constant speed segment, an non-constant speed segment, and a flight path angle; receiving 1206 an input identifying at least one of the symbols; and determining 1208, in consideration of flight parameters of the aircraft, a location on the computed vertical profile for at least one of a plurality of markers, each of the markers associated with one of the symbols.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method for assisting a pilot in flying an aircraft on a computed vertical profile, comprising:
displaying (1102, 1202), on a display device (216), the computed vertical profile (302), the vertical profile comprising a plurality of segments;
displaying (1104, 1204), on the display device (216), an interface display (307) including a plurality of unique symbols (308, 310, 312, 314, 316, 318), each symbol (308, 310, 312, 314, 316, 318) of the plurality corresponding to a segment type;
receiving (1106, 1206) an input identifying one of the symbols (308, 310, 312, 314, 316, 318) from within the interface display (307); and
in response to selection of the one of the symbols:
determining (1108, 1208) a location on the computed vertical profile (302) for a marker (408, 410) associated with the identified symbol (308, 310) in consideration of flight parameters of the aircraft; and
displaying, on the display device (216), at the determined location the marker (408, 410) associated with the identified symbol (308, 310) on the computed vertical profile (302) at an end of a segment (412, 414) of the plurality of segments, the segment (412, 414) following the marker (408, 410) being associated with the symbol (308, 310).

2. The method of claim 1 wherein displaying the computed vertical profile comprises displaying an approach to a runway (304).

3. The method of claim 1 wherein displaying the symbols comprises displaying symbols representing at least one of the group consisting of an idle path (308), a geometric path (310), an airbrake segment (312), a constant speed segment (314), an non-constant speed segment (316), and a flight path angle (318).

4. The method of claim 1 wherein receiving an input comprises sensing a touch to one of the symbols.

5. The method of claim 1 wherein receiving an input comprises placing a cursor over one of the symbols.

6. The method of claim 1 further comprising:
defining the plurality of segments comprising the computed vertical profile; and
placing one of the markers at an end of each segment of the plurality.

7. The method of claim 2 further comprising:
defining the plurality of segments comprising the computed vertical profile; and
placing one of the markers at an end of each segment of the plurality.

8. A system (200) for assisting a pilot in flying an aircraft on a computed vertical profile (302), the system comprising:
a display (216) configured to:
display the computed vertical profile (302), the vertical profile comprising a plurality of segments;
display an interface display (307) including a plurality of unique symbols (308, 310, 312, 314, 316, 318), each symbol of the plurality corresponding to a segment type, the symbols representing at least one of the group consisting of an idle path (308), a geometric path (310), an airbrake segment (312), a constant speed segment (314), an non-constant speed segment (316), and a flight path angle (318);
a processor (202) configured to:
receive an input identifying at least one of the symbols from within the interface display; and
in response to selection of the at least one of the symbols:
determine, in consideration of flight parameters of the aircraft, a location on the computed vertical profile for at least one of a plurality of markers (408, 410), each of the markers associated with one of the at least one of the symbols (308, 310); and
display each of the markers (408, 410) associated with one of the at least one of the symbols (308, 310) at the determined location on the computed vertical profile (302) at an end of a respective segment (412, 414) of the plurality of segments, the respective segment following the marker being associated with that symbol.

9. The system of claim 8 wherein the computed vertical profile comprises an approach to a runway.

10. The system of claim 8 wherein the display is further configured to:
receive an input comprises sensing a touch to one of the symbols.

11. The system of claim 8 wherein the processor is further configured to:
receive an input comprises placing a cursor over one of the symbols.

12. The system of claim 8 wherein the processor is further configured to:
define the plurality of segments comprising the computed vertical profile; and
placing one of the markers at an end of each segment of the plurality.

13. The system of claim 9 wherein the processor is further configured to:
define the plurality of segments comprising the computed vertical profile; and
placing one of the markers at an end of each segment of the plurality.

## Patentansprüche

1. Verfahren, um einen Piloten beim Fliegen eines Flugzeugs auf einem berechneten vertikalen Profil zu unterstützen, das Folgendes umfasst:
Anzeigen (1102, 1202) des berechneten vertikalen Profils (302) auf einer Anzeigevorrichtung (216), wobei das vertikale Profil mehrere Segmente umfasst;
Anzeigen (1104, 1204) einer Schnittstellenanzeige (307), die mehrere eindeutige Symbole (308, 310, 312, 314, 316, 318) enthält, auf der Anzeigevorrichtung (216), wobei jedes der mehreren Symbole (308, 310, 312, 314, 316, 318) einem Segmenttyp entspricht;
Empfangen (1106, 1206) einer Eingabe, die eines der Symbole (308, 310, 312, 314, 316, 318) von innerhalb der Schnittstellenanzeige (307) identifiziert; und
als Reaktion auf die Auswahl des einen der Symbole:
Bestimmen (1108, 1208) eines Orts auf dem berechneten vertikalen Profil (302) für eine Markierung (408, 410), die dem identifizierten Symbol (308, 310) zugeordnet ist, unter Berücksichtigung von Flugparametern des Flugzeugs; und
Anzeigen der Markierung (408, 410), die dem identifizierten Symbol (308, 310) zugeordnet ist, an dem bestimmten Ort auf dem berechneten vertikalen Profil (302) an einem Ende eines Segments (412, 414) der mehreren Segmente auf der Anzeigevorrichtung (216), wobei das Segment (412, 414) auf die Markierung folgt, die dem Symbol (308, 310) zugeordnet ist.

2. Verfahren nach Anspruch 1, wobei das Anzeigen des berechneten vertikalen Profils umfasst, eine Annäherung an eine Rollbahn (304) anzuzeigen.

3. Verfahren nach Anspruch 1, wobei das Anzeigen der Symbole umfasst, Symbole anzuzeigen, die mindestens eines der Gruppe repräsentieren, die aus einem Ruheweg (308), einem geometrischen Weg (310), einem Luftbremsensegment (312), einem Segment konstanter Geschwindigkeit (314), einem Segment nicht konstanter Geschwindigkeit (316) und einem Flugwegwinkel (318) besteht.

4. Verfahren nach Anspruch 1, wobei das Empfangen einer Eingabe umfasst, eine Berührung eines der Symbole zu erfassen.

5. Verfahren nach Anspruch 1, wobei das Empfangen einer Eingabe umfasst, einen Cursor über einem der Symbole zu positionieren.

6. Verfahren nach Anspruch 1, das ferner Folgendes umfasst:
Definieren der mehreren Segmente, die das berechnete vertikale Profil umfassen; und
Positionieren einer der Markierungen an einem Ende jedes Segments der mehreren.

7. Verfahren nach Anspruch 2, das ferner Folgendes umfasst:
Definieren der mehreren Segmente, die das berechnete vertikale Profil umfassen; und
Positionieren einer der Markierungen an einem Ende jedes der mehreren Segmente.

8. System (200), um einen Piloten beim Fliegen eines Flugzeugs auf einem berechneten vertikalen Profil (302) zu unterstützen, wobei das System Folgendes umfasst:
eine Anzeige (216), die konfiguriert ist:
das berechnete vertikale Profil (302) anzuzeigen, wobei das vertikale Profil mehrere Segmente umfasst;
eine Schnittstellenanzeige (307) anzuzeigen, die mehrere eindeutige Symbole (308, 310, 312, 314, 316, 318) umfasst, wobei jedes der mehreren Symbole einem Segmenttyp entspricht, wobei die Symbole mindestens eines der Gruppe repräsentieren, die aus einem Ruheweg (308), einem geometrischen Weg (310), einem Luftbremsensegment (312), einem Segment konstanter Geschwindigkeit (314), einem Segment nicht konstanter Geschwindigkeit (316) und einem Flugwegwinkel (318) besteht;
einen Prozessor (202), der konfiguriert ist:
eine Eingabe, die mindestens eines der Symbole von innerhalb der Schnittstellenanzeige identifiziert, zu empfangen; und
als Reaktion auf die Auswahl des mindestens einen der Symbole:
einen Ort auf dem berechneten vertikalen Profil für mindestens eine der mehreren Markierungen (408, 410) unter Berücksichtigung von Flugparametern des Flugzeugs zu bestimmen, wobei jede der Markierungen einem des mindestens einen Symbols (308, 310) zugeordnet ist; und
jede der Markierungen (408, 410), die einem des mindestens einen der Symbole (308, 310) zugeordnet ist, an dem bestimmten Ort auf dem berechneten vertikalen Profil (302) an einem Ende eines jeweiligen Segments (412, 414) der mehreren Segmente anzuzeigen, wobei das jeweilige Segment auf die Markierung folgt, die diesem Symbol zugeordnet ist.

9. System nach Anspruch 8, wobei das berechnete vertikale Profil eine Annäherung an eine Rollbahn umfasst.

10. System nach Anspruch 8, wobei die Anzeige ferner konfiguriert ist:
eine Eingabe zu empfangen, die eine Berührung eines der Symbole erfasst.

11. System nach Anspruch 8, wobei der Prozessor ferner konfiguriert ist:
eine Eingabe zu empfangen, die umfasst, einen Cursor über einem der Symbole zu positionieren.

12. System nach Anspruch 8, wobei der Prozessor ferner konfiguriert ist:
die mehreren Segmente zu definieren, die das berechnete vertikale Profile umfassen; und
eine der Markierungen an einem Ende jedes der mehreren Segmente zu positionieren.

13. System nach Anspruch 9, wobei der Prozessor ferner konfiguriert ist:
die mehreren Segmente zu definieren, die das berechnete vertikale Profil umfassen; und
eine der Markierungen an einem Ende jedes der mehreren Segmente zu positionieren.

## Revendications

1. Procédé visant à aider un pilote à piloter un aéronef sur un profil vertical calculé, comprenant
l'affichage (1102, 1202), sur un dispositif d'affichage (216), du profil vertical calculé (302), le profil vertical comprenant une pluralité de segments ;
l'affichage (1104, 1204), sur le dispositif d'affichage (216), d'un affichage d'interface (307) comportant une pluralité de symboles uniques (308, 310, 312, 314, 316, 318), chaque symbole (308, 310, 312, 314, 316, 318) de la pluralité correspondant à un type de segment ;
la réception (1106, 1206) d'une entrée identifiant l'un des symboles (308, 310, 312, 314, 316, 318) depuis l'intérieur de l'affichage d'interface (307) ; et
en réponse à la sélection de l'un des symboles :
la détermination (1108, 1208) d'un emplacement sur le profil vertical calculé (302) d'un marqueur (408, 410) associé au symbole identifié (308, 310) en considérant les paramètres de vol de l'aéronef ; et
l'affichage, sur le dispositif d'affichage (216), à l'emplacement déterminé du marqueur (408, 410) associé au symbole identifié (308, 310) sur le profil vertical calculé (302) à une extrémité d'un segment (412, 414) de la pluralité de segments, du segment (412, 414) suivant le marqueur (408, 410) associé au symbole (308, 310).

2. Procédé selon la revendication 1 dans lequel l'affichage du profil vertical calculé comprend l'affichage d'une approche d'une piste (304).

3. Procédé selon la revendication 1 dans lequel l'affichage des symboles comprend l'affichage de symboles représentant au moins l'un du groupe consistant en une trajectoire inactive (308), une trajectoire géométrique (310), un segment de freinage aérodynamique (312), un segment de vitesse constante (314), un segment de vitesse non constante (316), et un angle de trajectoire de vol (318).

4. Procédé selon la revendication 1 dans lequel la réception d'une entrée comprend la détection d'un toucher de l'un des symboles.

5. Procédé selon la revendication 1 dans lequel la réception d'une entrée comprend le placement d'un curseur sur l'un des symboles.

6. Procédé selon la revendication 1 comprenant en outre :
la définition de la pluralité de segments composant le profil vertical calculé ; et
le placement de l'un des marqueurs à une extrémité de chaque segment de la pluralité.

7. Procédé selon la revendication 2 comprenant en outre :
la définition de la pluralité de segments composant le profil vertical calculé ; et
le placement de l'un des marqueurs à une extrémité de chaque segment de la pluralité.

8. Système (200) visant à aider un pilote à piloter un aéronef sur un profil vertical calculé (302), le système comprenant :
un afficheur (216) configuré pour
afficher le profil vertical calculé (302), le profil vertical comprenant une pluralité de segments ;
afficher un affichage d'interface (307) comportant une pluralité de symboles uniques (308, 310, 312, 314, 316, 318), chaque symbole de la pluralité correspondant à un type de segment, les segments représentant au moins l'un symboles représentant au moins l'un du groupe consistant en une trajectoire inactive (308), une trajectoire géométrique (310), un segment de freinage aérodynamique (312), un segment de vitesse constante (314), un segment de vitesse non constante (316), et un angle de trajectoire de vol (318) ;
un processeur (202) configuré pour :
recevoir une entrée identifiant au moins l'un des symboles de l'affichage d'interface ; et
en réponse à la sélection d'au moins l'un des symboles :
déterminer, en considérant les paramètres de vol de l'aéronef, un emplacement sur le profil vertical calculé d'au moins l'un d'une pluralité de marqueurs (408, 410), chacun des marqueurs étant associé à l'un de l'au moins un des symboles identifiés (308, 310) ; et
afficher, chacun des marqueurs (408, 410) associé à l'un de l'au moins un des symboles (308, 310) à l'emplacement déterminé sur le profil vertical calculé (302) à une extrémité d'un segment (412, 414) de la pluralité de segments, le segment respectif suivant le marqueur associé à ce symbole.

9. Système selon la revendication 8 dans lequel le profil vertical calculé comprend une approche d'une piste.

10. Système selon la revendication 8 dans lequel l'affichage est configuré en outre pour :
recevoir une entrée qui comprend la détection d'un toucher de l'un des symboles.

11. Système selon la revendication 8 dans lequel l'affichage est configuré en outre pour :
recevoir une entrée qui comprend le placement d'un curseur sur l'un des symboles.

12. Système selon la revendication 8 dans lequel le processeur est configuré en outre pour :
définir la pluralité de segments composant le profil vertical calculé ; et
placer l'un des marqueurs à une extrémité de chaque segment de la pluralité.

13. Système selon la revendication 9 dans lequel le processeur est configuré en outre pour :
définir la pluralité de segments composant le profil vertical calculé ; et
placer l'un des marqueurs à une extrémité de chaque segment de la pluralité.
